# EUROPEAN PATENT APPLICATION

(11) **EP 4 585 464 A1**
(43) Date of publication of application: **16.07.2025**
(21) Application number: 24151116.1
(22) Date of filing: 10.01.2024
(51) Int. Cl.: B60Q 1/00, B60Q 1/10, B60Q 1/12

(54) **VEHICLE LAMP WITH MODULE TILT ADJUSTMENT AND A METHOD OF AUTOMATIC MODULE TILT ADJUSTMENT**

(71) Applicant: Hella Autotechnik Nova s.r.o., 78985 Mohelnice (CZ)
(72) Inventor: Nemrava, Jri, 789 85 Mohelnice (CZ)
(74) Representative: Behr-Wenning, Gregor

(57) **Abstract**

Vehicle lamp and a method of adjusting its inclination. The lamp comprises an illumination module (1) and a frame (2), wherein the illumination module (1) is rotatably connected to the frame (2). The lamp further comprises an actuator (3) for rotating the module (1) and a control unit (4) for driving the actuator. The illumination module (1) further comprises a tilt sensor (5), wherein the control unit (4) is adapted to control the actuator (3) based on the data from the tilt sensor (5).

## Description

### Technical field

The present invention relates to illumination devices for vehicles, especially to automobile headlamps. The illumination device comprises a tiltable module with actuator for adjusting the module's inclination.

### Background of the Invention

Most vehicle headlight nowadays comprise multiple illumination modules, at least some of which are rotatably attached to the headlight. Stepper motors are used to adjust the modules to ensure a correct inclination, e.g., vertically to ensure correct inclination during braking, accelerating or when the vehicle carries a heavy load, and/or horizontally during steering.

In some headlights, a correct inclination can be monitored cameras, and if a module is incorrectly inclined, e.g., due to material deformation caused by an increased temperature, the module is then automatically adjusted.

Cameras, however, are fairly expensive and provide large amounts of data which need to be processed to determine an inclination of a module captured by the camera. The known systems for automatic tilt correction of vehicle headlight modules are thus very expensive and require substantial amounts of energy and computational power. It would therefore be advantageous to provide an improved system for providing an automatic correction of module inclination for vehicle lamps which would be cheaper and/or would require less electricity.

### Summary of the Invention

The shortcomings of the solutions known in the prior art are to some extent eliminated by a vehicle lamp comprising at least one illumination module and a frame. The frame can be one or more structural components which carry other components of the lamp, hold the lamp together, enclose and protect the other components etc. E.g., it can be a plastic casing encapsulating the rest of the lamp and having attachments for mounting the lamp to a vehicle. The lamp can especially be a taillight or a headlight, but it can also be for example an illuminated front grille or other external or internal vehicle illumination device.

The illumination module is rotatably connected to the frame. The rotatable connection can have one axis of rotation, e.g., horizontal axis such that tilting of the module adjust how far the lamps shines. It can also have multiple axes of rotation, e.g., both vertical and horizontal axes. The lamp further comprises an actuator, such as a stepper motor, for rotating the module, and a control unit. The illumination module further comprises a tilt sensor, wherein the control unit is communicatively connected to the actuator and to the tilt sensor and is adapted to receive data from the tilt sensor and to control the actuator based on the data from the tilt sensor.

The communication connection (i.e., a connection which can be used to transfer data) can be a wired connection. A wireless connection is also possible but is less advantageous for communication within a lamp. The tilt sensor can be any sensor or measuring device capable of determining an inclination/tilt/angle or direction of the module in at least one axis. It can provide an absolute inclination, e.g., a deviance from a vertical axis (i.e. direction of gravity), or a relative inclination, e.g., with respect to another module or another component of the lamp, with respect to forward direction of the vehicle etc.

For example, a gyroscope or a magnetometer can be used, e.g., similar to those used in smartphones for determining their orientation in one or more axes. For example, document WO2021134668A1 describes a MEMS gyroscope which can be used. The tilt sensor can be comprised from multiple sensors or kinds of sensors. The data outputted from the sensor can have a form of the desired inclination, e.g., it can be values in degrees defining deviation from the direction of gravity. The data can also be raw data, such as direction(s) of Earth's magnetic field. The control unit is then adapted to process this data and determine the desired inclination measurement(s) from the data.

The control unit thus comprises instructions, e.g., software instruction stored in a memory unit connected to the control unit, wherein these instructions, when run by the control unit, provide the required receiving and processing of the tilt sensor data. If an inclination correction is required, e.g., when the control unit determines that the module is incorrectly tilted, the instructions further ensure the controlling of the actuator based on the actual inclination in order to achieve a correct inclination. The correct inclination can be a construction parameter of the lamp or the vehicle, can be prescribed by regulations, can be chosen by manufacturer of the lamp or vehicle, can be chosen by the driver of the vehicle etc. For example, it can be defined that a high-beam module of a vehicle headlamp needs to be directed such that it illuminates the road ahead for 100-120 meters. This distance is given by law and the module then should be inclined accordingly.

The control unit can be dedicated to the inclination adjustment, e.g., it can solely be connected to the tilt sensor and the actuator and a power source. It can however also serve other function(s), e.g., it can be a lamp control unit, which is a standard component of vehicle headlamps. Such a lamp control unit can be connected to the vehicle's ECU and can further control light sources, fans, washers etc. It can also provide further module adjustments, such as cornering, automatic levelling etc.

The lamp can further comprise any standard lamp or headlight components, such as further frames or casings, optical components such as lens, reflectors, shades etc., electronic components such as further light sources or actuators, fans, washers, additional sensors etc., ventilation/defogging components and so on.

The vehicle lamp according to the present invention thus provides an automatic correction of module inclination. The correction can be provided periodically during driving, e.g., every minute, every ten minutes, every 20 seconds etc., it can occur after each engine start, it can be manually started by the driver etc. An incorrect inclination of a lamp module can for example occur due to thermal expansion of a material of the lamp or the module. Light sources produce heat and the lamp components including a casing of the module, the lamp frame, lens holder etc., thus get heated by the light sources when the lamp is on. A deformation caused by this heat can misalign the components, bend them etc. Other causes of incorrect inclination can be vibrations or collisions, long-term wear of components or material degradation, manufacturing imprecisions etc.

Since the tilt sensor in the present invention is located directly in the respective module, the inclination of which is to be checked and corrected, the type of cause of the incorrect inclination doesn't have an impact on the automatic correction. Heat deformation is corrected the same as a collision deformation or manufacturing imprecision. The lamp thus has its module adjusted more reliably. The tilt sensor is connected directly to the control unit, and there is thus no need for it to communicate via a vehicle bus (which is necessary with external sensors such as cameras). The present invention thus does not take up any additional bus slot and the automatic inclination correction does not require any actions or instructions from the vehicle's main control unit. The correction is also not dependent on actuator precision, which can often deteriorate during long-term use, since repeated or continuous direct measurements of the module inclination allow the control unit to compensate for any imprecisions of the actuator.

The tilt sensor is advantageously able to measure inclination with respect to direction of gravity. Many types of sensors such as gyroscopes or gravity sensors can be used to measure this inclination, i.e., a deviation from a vertical axis. Up and down rotation of modules in vehicle lamps is widely used and automatic correction of module output direction angle with respect to gravity (or with respect to a horizontal plane) can thus be helpful for many vehicle lamps. The presented vehicle lamp can then also provide automatic leveling of the lamp, e.g., in order to maintain proper output direction of the module regardless of how much the vehicle is loaded.

The tilt sensor can alternatively or additionally be able to measure inclination with respect to another component of the lamp located outside of the illumination module comprising this tilt sensor. This another component can for example be another tilt sensor, e.g., another gyroscope such that the control unit receives data about orientation of the module and data about orientation of the lamp's frame, and comparing these two orientations serves as a basis for the module adjustment via the actuator. The adjustment can thus be independent of orientation of the vehicle, i.e., driving uphill or downhill won't result in any unwanted module readjustment. Similarly, there can be a second sensor for measuring horizontal orientation, e.g., with respect to the Earth's gravity field, placed on the frame, and the control unit can then compare direction of the module and of the frame in horizontal plane and adjust the module accordingly if it deviates from its desired orientation.

The another component can also be a magnet, such that a magnetic sensor included in the module's tilt sensor can determine any rotation of the module with respect to the frame. Similarly, a relative orientation between the module and the frame or other part of the lamp can be measured optically. The another component can also be another module, especially a tilt sensor of another module. Multiple modules can then have their positions synchronized such that when one of multiple modules is incorrectly tilted due to heat expansion or other factors, it can be properly aligned with the other modules by the control unit based on comparison of tilt data from the modules' respective tilt sensors.

The control unit can comprise a memory unit containing a predefined value of module inclination, wherein the control unit is adapted to adjust the illumination module by the actuator when inclination of the illumination module measured by the tilt sensor differs from the predefined value. Inclination or tilt herein can mean inclination or rotation in any plane or around any axis, e.g., it can especially by an up-down inclination or left-right inclination. The predefined value can be a single numerical value or an interval. If the control unit finds out from the data from the tilt sensor, that the actual inclination of the module deviates from the predetermined correct inclination, e.g., by more than a predefined tolerance value, or that the actual inclination is outside of a predefined interval of correct inclination, the control unit ensures a correction of the inclination. The correction preferably includes further measurements of the actual inclination to check that the correction really results in reaching the correct predefined orientation. Using stepper motor as the actuator can make it possible to adjust the module by a determined **difference α between the a**ctual and correct inclinations, but even then it might be advantageous to check the inclination after the correction is done in case the stepper motor is not sufficiently precise.

The predefined value can be a factory-set constant, e.g., it can be firmly given that a certain illumination module should be inclined by two degrees downwards with respect to a horizontal plane. The predefined value can however also be adjustable, e.g., by the vehicle's main control unit, e.g., to allow for a change of legislation, to make leveling or cornering possible whenever needed etc.

The illumination module advantageously comprises a printed circuit board (PCB), wherein the tilt sensor is carried by the printed circuit board. A MEMS sensor can advantageously be used, but using any other sensor type is possible. The printed circuit board then further preferably also carries a light source of the illumination module. The tilt sensor then measures inclination of the PCB, e.g., of the light source. Placing the tilt sensor on the same PCB as the light source also significantly simplifies manufacturing of the lamp and connection to the control unit (which can be but does not have to be also carried by the PCB).

The control unit can be further adapted to adjust the module by the actuator based on the data from the tilt sensor at engine start. I.e., once the engine is started and power is provided to the lamp, the control unit ensures proper inclination of the module. After that, the inclination can be checked and adjusted, if needed, periodically until the engine is stopped. This ensures that the module is always properly inclined from the start and reduces requirements on lamp-assembly. In the state of the art, mechanical adjustment of modules is often necessary at the end of lamp assembly to set all the modules to correct orientations - the present invention can remove this step from the assembly or at least reduce a number of components that have to be adjusted in this way.

When the module is automatically correctly positioned after each engine start, there is no need for time-consuming manual adjustment of module orientation during assembly, which is commonly needed for lamps from the current state of the art.

The control unit is preferably a lamp control unit mounted in the vehicle lamp. The lamp control unit can further be communicatively connected with the module's light source(s) and can control multiple modules (which can but do not have to all comprise a tilt sensor). The lamp control unit can be connected to a vehicle bus and communicate with the vehicle's main control unit.

The vehicle lamp according to the invention can especially be a headlight. Adjustable modules are most commonly used as a part of headlights, and for headlights, a precise directing of output light beam is the most important, so the present invention is most applicable in headlights.

The lamp can comprise at least a second illumination module rotatably connected to the frame and an actuator for rotating the second illumination module, wherein the second illumination module comprises a second tilt sensor. The control unit is then further communicatively connected to the second actuator and to the second tilt sensor and is adapted to receive data from the second tilt sensor and to control the second actuator based on the data from the second tilt sensor. In other words, the lamp can provide automatic correction of inclination for multiple modules. The modules can be aligned with respect to each other, with respect to a different part of the lamp and/or with respect to some absolute position/orientation, such as the direction of gravity, as was described above.

The shortcomings of the solutions known in the prior art are to some extent also eliminated by a computer implemented method of automatically adjusting inclination of an illumination module in a vehicle lamp. The method comprises a step of receiving, in a control unit, data from a tilt sensor placed in the illumination module, and a step of rotating the illumination module, via an actuator controllable by the control unit, based on the received data. This method can thus by implemented by the lamp according to the invention and provides analogous advantages as the lamp.

Before the step of rotating, the method can comprise a step of comparing inclination value from the received data with a threshold inclination value, wherein the step of rotating is based on the result of the comparison.

During the step of rotating, the control unit can receive data from the tilt sensor and check inclination of the module during the rotating. This can ensure that a more precise correct inclination is reached by the rotating, regardless of precision of the actuator, as was described in more detail above.

### Description of drawings

A summary of the invention is further described by means of exemplary embodiments thereof, which are described with reference to the accompanying drawings, in which:
- Fig 1.: Schematically shows, in Fig. 1A, an illumination module of a vehicle lamp according to an exemplary embodiment of the invention, wherein the module's actual inclination Ia equals a correct inclination Ic, i.e., the module is properly oriented. In fig. 1B this figure schematically shows the module from fig. 1A wherein the module is tilted more than it should, and its Ia is thus not equal to Ic and a correction of the inclination is needed.
- Fig 2.: Schematically shows the inclinations Ia and Ic from fig. 1B and an angle **α of difference between them.**
- Fig 3.: Schematically shows a vehicle lamp according to an exemplary embodiment of the invention, wherein one module rotatably attached to a lamp frame and connected to a control unit is shown.
- Fig 4.: Shows a flowchart of an exemplary method of controlling a vehicle lamp according to the invention.

### Exemplary Embodiments of the Invention

The invention will be further described by means of exemplary embodiments with reference to the respective drawings.

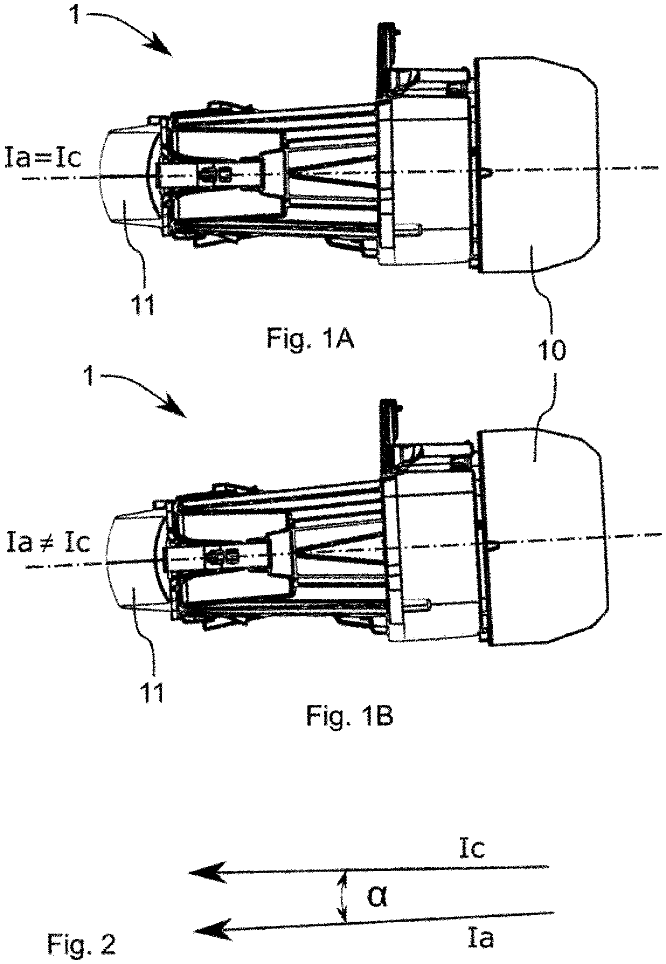

A first exemplary embodiment of the vehicle lamp according to the invention is shown in figs. 1-3. The lamp comprises a frame 2, a lamp control unit 4, and two adjustable illumination modules 1 (only one module 1 is shown in the drawings, the other one has analogous construction and attachment to the frame 2). The lamp in this embodiment is an automobile headlight 9 and further comprises standard headlight components including a casing, further nonadjustable modules including a turn signal module, cover lens, connectors and wiring etc. (not shown).

A first module 1 in this embodiment is adjustable by rotation around a horizontal axis. It is connected to the frame 2 by a hinge which enables it to rotate by approximately 10 degrees up and down from a horizontal orientation in which an axis of the module's output beam lies in a horizontal plane, and thereby regulating how far ahead the module 1 shines. A stepper motor is provided for the module 1 as an actuator 3 for rotating the module 1. The module 1 comprises module casing which encapsulates further components - a PCB 7 with a heat sink 10, two lenses 11, an array of LED light sources 8 and a tilt sensor 5, which is a gyroscope in this embodiment. The LEDs and the gyroscope are carried by the PCB 7.

A second module 1 comprises the same components and is rotatably attached to the frame 2 next to the first module 1. The first module 1 is a high beam module while the second module 1 is a daytime running lamp module. The lamp frame 2 is made from plastic and is from one piece of material with the lamp casing. The casing is provided with mounting attachments for mounting the lamp to an automobile.

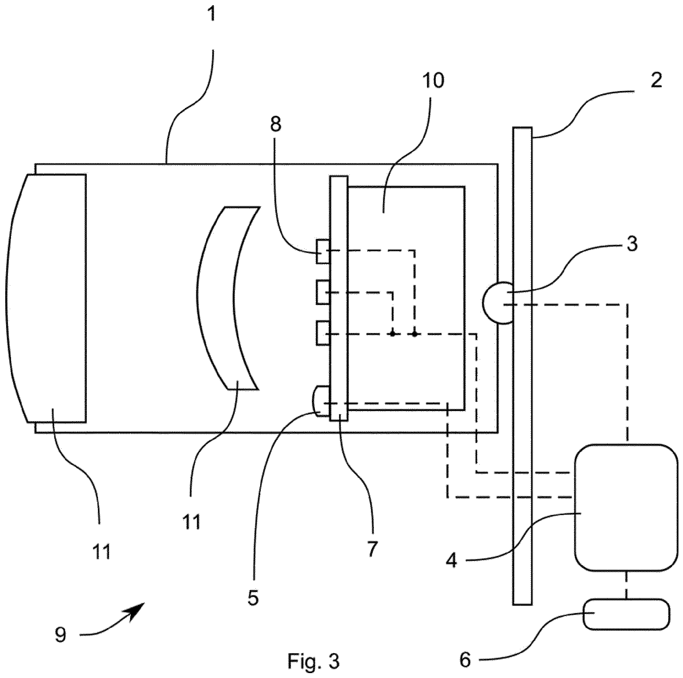

The control unit 4 is carried by its own PBC (not shown) attached to the lamp frame 2. It comprises a memory unit 6 which stores software instruction defining the control unit's 4 functions. The control unit 4 is connected, by wires and PCB traces (indicated by dashed lines in fig. 3), to each LED light source 8 of each of the two modules 1 and to their tilt sensors 5 and actuators 3 (see fig. 3). The control unit 4 can thus control each light source 8 and actuator 3 as needed and can receive data from the gyroscopes and determine the module's 1 inclination from these data. The memory unit 6 also stores a predefined value of a correct inclination of each of the modules 1, which in this embodiment is 2° measured downwards from a horizontal plane.

The control unit 4 periodically receives data from the tilt sensor 5, e.g., each second. It determines inclination of the module 1 from the data with a longer period, e.g., each minute. It also determines the inclination right after it's turned on, i.e., when an engine of the automobile comprising the lamp is started. After determining the inclination, which is an actual measured inclination Ia of the respective module 1, the value of Ia is compared with the predetermined value Ic of a correct inclination. If the difference is larger than one tenth of a degree (see fig. 2, where the difference **α is 2°),** the control unit 4 operates the respective actuator 3, and rotates the module 1 to correct its inclination. During and right after the rotation, the control unit 4 again checks the inclination to verify that it's being corrected accordingly.

It this way, the control unit 4 maintains a correct inclination of both adjustable modules 1. If any of the modules 1 gets misaligned, e.g., by vibrations or by a material distortion caused by heat from the LEDs, the correct inclination relative to the horizontal plane will be secured within a minute.

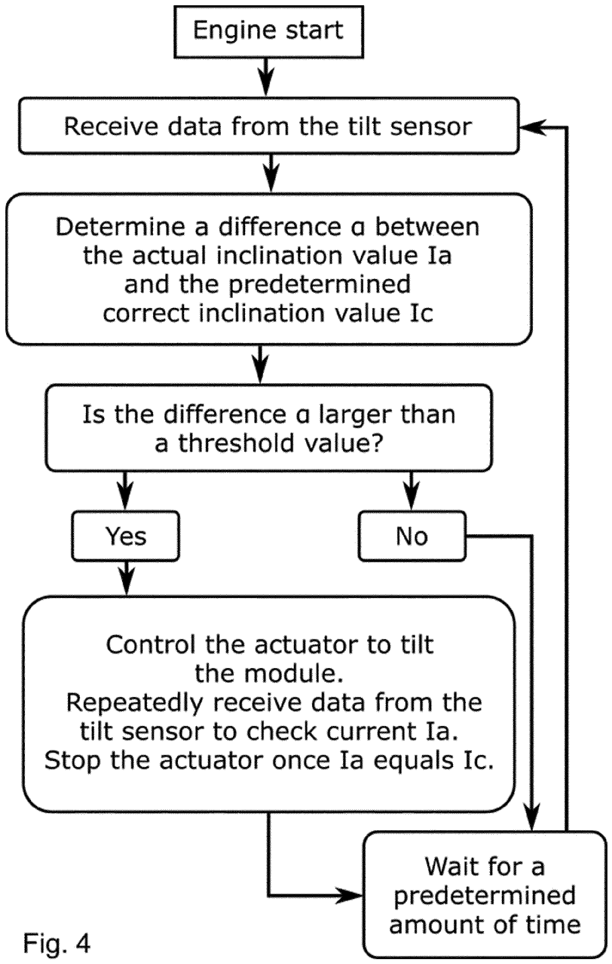

The control unit 4 thus provides a method for controlling a vehicle lamp. The method corresponds to the function of the control unit 4, provided by running the software instructions stored in the memory unit 6, described above. This embodiment of the method is schematically illustrated by the flowchart in fig. 4. The method is thus implemented by the lamp according to the above-described first embodiment (mounted in an automobile) and comprises the following steps:
- Start of the automobile's engine. This step provides power from a car battery into the electronical components of the lamp, especially the control unit 4 and the tilt sensors 5, also to the actuators 3 and LEDs. This step also includes an immediate inclination verification. The control unit 4 retrieves the value of Ic from its memory unit 6 and determines the value of Ia from the gyroscope tilt sensors 5 (this happens for both adjustable modules 1 independently, as well as the following steps). If Ia is different from Ic by more than 0.1°, i.e., if Ia does not fall into an acceptable interval of correct inclinations given by the tolerance - Ic ± 0.1°, the control unit 4 operates the stepper motor actuator 3 and rotates the module 1 in an appropriate direction by the difference between Ia and Ic.

After the first step, the following steps are run repeatedly until the engine is stopped and the control unit 4 is no longer being powered.
- The control unit 4 receives data from the gyroscope, determines Ia, i.e., how much the module 1 is inclined with respect to a horizontal plane, compares it with Ic, and corrects Ia if it differs from Ic too much. If the correction is needed and the actuator 3 is used, the control unit 4 repeatedly checks Ia, as it's being corrected, and ensures that at the end of the rotating, Ia = Ic ± 0.1°.
- The control unit 4 then waits for a predetermined period. In this embodiment, the period is such that the determination of Ia happens every minute. The previous step is thus started once a minute.

The method ends once the automobile is stopped, and its engine turned off.

In a second exemplary embodiment of the vehicle lamp, the lamp is again a headlight 9 and comprise the same components as in the first embodiment, except that there is only one adjustable module 1, the module 1 is rotatable in two perpendicular axes - horizontally and vertically, and the tilt sensor 5 is multi-axis tilt sensor 5 comprising a gyroscope for measuring inclination around a horizontal axis and a magnetometer for measuring inclination around a vertical axis (i.e., to serve basically as a compass). The tilt sensor 5 is a MEMS type sensor carried by the PCB 7 carrying LED light sources 8 of the module 1.

The control unit 4 thus can establish orientation of the module 1 in two axes. Inclination around horizontal axis, i.e., up and down, determines how far the module 1 shines. Inclination around vertical axis, i.e., left and right, determines if the module 1 shines directly ahead, towards the center of the road or towards the sides. The memory unit 6 thus comprises two values of Ic, one in vertical plane and one in horizontal plane. Each of the inclinations is checked independently, in this embodiment every five minutes. The control unit 4 thus receives data form the tilt sensor 5 at least once in five minutes and determines both Ia values. There are two actuators 3 and if either of the Ia values differs from the respective Ic value, the control unit 4 rotates the module 1 accordingly.

In this embodiment, Icz (inclination around vertical axis Z) is 0°, i.e., the module 1 is supposed to shine directly ahead in the direction of travel of the vehicle. Icy (inclination about horizontal axis perpendicular to the direction of travel, i.e., axis going from left to right) is 1° downwards. Tolerance for Icz is 1°, for Icy it is 0.2°.

The lamp in this embodiment provides automatic cornering, i.e., the module 1 is rotated around the vertical axis when the vehicle turns to illuminate the area towards which the vehicle is being directed by the steering wheel. To prevent the control unit 4 from balancing this cornering by the automatic tilt correction, the value of Icz is automatically changed when cornering occurs. The vehicle's main control unit 4 thus communicates with the lamp control unit 4 and changes the Icz value if the steering wheel is rotated and the cornering function of the lamp is activated. In an alternative variant of this embodiment, the inclination correction, at least around the vertical axis, can be selectively deactivated, when the vehicle turns and the cornering is needed, and then activated again.

Other features of the second embodiment are as described above in the first embodiment. I.e., the automatic tilt correction is run when the engine is started, and the control unit 4 implements an embodiment of the method according to the invention given by the above-described function. In this method, the two inclinations Ia are thus checked and corrected independently each five minutes by the same steps as depicted in fig. 4.

A third embodiment of the lamp is the same as the first embodiment except that there is a third tilt sensor 5 - gyroscope, which is carried by the PCB carrying the control unit 4. I.e., the control unit 4 receives data from all three tilt sensors 5 and thus determines inclination of the first module 1, of the second module 1, and of the lamp frame 2. The Ic value of both modules 1 describes an inclination of the module 1 with respect to the inclination of the frame 2 as measured by the third gyroscope. This makes the automatic correction of the inclination of the modules 1 independent of inclination of the road or the whole vehicle. Other features of this embodiment are the same as described above and depicted in figs. 1-4.

Similar alternative embodiment can be provided for the second embodiment, where the frame 2 also carries its own tilt sensor 5 and the actual inclination Ia is compared to the inclination of the frame 2. The frame tilt sensor 5 can in some variants of this embodiment comprise only a gyroscope for measuring up-down inclination, while the left-right inclination is measured with respect to the Earth's magnetic field as in the second embodiment. In other variants, the frame tilt sensor 5 can further for example comprise a magnet wherein the left-right inclination of the module 1 is measured not with respect to the Earth's filed but with respect to this magnet, i.e., with respect to the frame 2.

Other alternative embodiments will be apparent to a skilled person. For example, the number of the adjustable modules 1 can be different, e.g., there can be three or more modules 1 with autocorrection of inclination. Construction of the modules 1 or the lamp can be different, e.g., there can be different optical elements such as lenses 11, shades or reflectors, there can be different light sources 8 etc. The tilt sensor 5 can in some embodiments be carried e.g., by the module casing or by a lens 11 etc., instead of the PCB 7 with the LEDs. The types of sensors used for measuring the inclination can also be different. In some embodiments, each module 1 can have its own control unit 4, in other embodiments, the control unit 4 processing the data from tilt sensor(s) 5 can be common for all the modules 1 but different from a unit controlling light sources 8, etc.

The lamp can in some embodiments be a different kind of lamp than a headlight 9, e.g., a taillight. In some embodiments, the inclination of the module(s) 1 can be around a vertical axis only. In other embodiments, different modules 1 can have different rotation axes, different Ic values, different intervals of checking Ia, different tolerances etc.

### Reference list

- 1 -: module
- 2-: frame
- 3 -: actuator
- 4 -: control unit
- 5 -: tilt sensor
- 6 -: memory unit
- 7 -: printed circuit board
- 8 -: light source
- 9 -: headlight
- 10 -: heat sink
- 11 -: lens

## Claims

1. Vehicle lamp comprising an illumination module (1) and a frame (2), wherein the illumination module (1) is rotatably connected to the frame (2) and the lamp further comprises an actuator (3) for rotating the module (1), **characterized in that** the lamp further comprises a control unit (4) and the illumination module (1) further comprises a tilt sensor (5), wherein the control unit (4) is communicatively connected to the actuator (3) and to the tilt sensor (5) and is adapted to receive data from the tilt sensor (5) and to control the actuator (3) based on the data from the tilt sensor (5).

2. The vehicle lamp according to claim 1 **wherein** the tilt sensor (5) is able to measure inclination with respect to direction of gravity.

3. The vehicle lamp according to any preceding claim **wherein** the tilt sensor (5) is able to measure inclination with respect to another component of the lamp located outside of the illumination module (1) comprising this tilt sensor (5).

4. The vehicle lamp according to any preceding claim **wherein** the control unit (4) comprises a memory unit (6) containing a predefined value of module (1) inclination, wherein the control unit (4) is adapted to adjust the illumination module (1) by the actuator (3) when inclination of the illumination module (1) measured by the tilt sensor (5) differs from the predefined value.

5. The vehicle lamp according to any preceding claim **wherein** the illumination module (1) comprises a printed circuit board (7), wherein the tilt sensor (5) is carried by the printed circuit board (7).

6. The vehicle lamp according to claim 5 **wherein** the printed circuit board (7) further carries a light source (8) of the illumination module (1).

7. The vehicle lamp according to any preceding claim **wherein** the control unit (4) is further adapted to adjust the module (1) by the actuator (3) based on the data from the tilt sensor (5) at engine start.

8. The vehicle lamp according to any preceding claim **wherein** the control unit (4) is a lamp control unit mounted in the vehicle lamp.

9. The vehicle lamp according to any preceding claim **wherein** the lamp is a headlight (9).

10. The vehicle lamp according to any preceding claim **wherein** the lamp comprises at least a second illumination module (1) rotatably connected to the frame (2) and a actuator (3) for rotating the second illumination module (1), wherein the second illumination module (1) comprises a second tilt sensor (5), wherein the control unit (4) is further communicatively connected to the second actuator (3) and to the second tilt sensor (5) and is adapted to receive data from the second tilt sensor (5) and to control the second actuator (3) based on the data from the second tilt sensor (5).

11. Computer implemented method of automatically adjusting inclination of an illumination module (1) in a vehicle lamp, **characterized in that** it comprises a step of receiving, in a control unit (4), data from a tilt sensor (5) placed in the illumination module (1) and a step of rotating the illumination module (1), via an actuator (3), based on the received data.

12. The method according to claim 11 **wherein** it comprises, before the step of rotating, a step of comparing inclination value from the received data with a threshold inclination value, wherein the step of rotating is based on the result of the comparison.

13. The method according to any one of claims 11 or 12 **wherein** during the step of rotating, the control unit (4) receives data from the tilt sensor (5) and checks inclination of the module (1) during the rotating.
